# EUROPEAN PATENT APPLICATION

(11) **EP 4 836 466 A1**
(43) Date of publication of application: **04.11.2026**
(21) Application number: 25749127.4
(22) Date of filing: 22.01.2025
(51) Int. Cl.: H04W 8/20, H04W 8/18, H04W 12/069, H04W 12/40, H04W 88/06

(54) **METHOD AND DEVICE FOR PROCESSING TERMINAL AND SERVER FOR PROVIDING PROFILE MOVEMENT**

(30) Priority: 30.01.2024 KR 20240014134
(71) Applicant: Samsung Electronics Co., Ltd., Suwon-si, Gyeonggi-do 16677 (KR)
(72) Inventor: YOON, Kangjin, Suwon-si, Gyeonggi-do 16677 (KR); KANG, Sujung, Suwon-si, Gyeonggi-do 16677 (KR)
(74) Representative: Gulde & Partner
(86) International application number: PCT/KR2025/001201
(87) International publication number: WO 2025/165040

(57) **Abstract**

The present disclosure relates to a 5G or 6G communication system for supporting higher data transmission rates. According to one embodiment of the present disclosure, a profile can be re-installed when an eUICC terminal is changed.

## Description

### [Technical Field]

The present invention relates to a method and device for installing and managing an embedded universal integrated circuit card (eUICC) profile.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

Meanwhile, as various services can be provided according to development of a mobile communication system, solutions for effectively providing these services are being required.

### [Disclosure]

### [Technical Problem]

An object of the present invention is to effectively provide services in a mobile communication system.

According to an embodiment disclosed in the present invention, it is intended to provide a method and device for a terminal to select a communication service and connect to a network in a communication system.

According to an embodiment disclosed in the present invention, it is intended to provide a method and device for a terminal to download a profile for connecting to a network online, and to install and manage the profile in a communication system.

According to an embodiment disclosed in the present invention, it is intended to provide a method and device for a terminal to efficiently re-download a profile, which is installed for connecting to a network, to the same or another terminal in a communication system.

According to an embodiment disclosed in the present invention, it is intended to provide a method and device for requesting and receiving an activation code from a profile server so that a terminal can efficiently re-download a profile, which is installed for connecting to a network, to the same or another terminal in a communication system.

Technical problems to be solved by the present invention are not limited to the above-mentioned technical problems, and other technical problems, which are not mentioned above, may be clearly understood from the following descriptions by those skilled in the art to which the present invention pertains.

### [Technical Solution]

In order to achieve the aforementioned objects, according to an embodiment of the present disclosure, there is provided a method performed by a terminal in a wireless communication system. The method may comprise: transmitting, to a profile server, a request message including a confirmation request on whether obtainment of an activation code for re-download of a first profile installed in the terminal is possible; and receiving, from the profile server, as a response to the request message, a response message including information indicating whether obtainment of an activation code for re-download for a profile installed in the terminal is possible.

Meanwhile, according to another embodiment of the present disclosure, there is provided a method performed by a profile server in a wireless communication system. The method may comprise: receiving, from a terminal, a request message including a confirmation request on whether obtainment of an activation code for re-download of a first profile installed in the terminal is possible; and transmitting, to the terminal, as a response to the request message, a response message including information indicating whether obtainment of an activation code for re-download for a profile installed in the terminal is possible.

Meanwhile, according to another embodiment of the present disclosure, there is provided a terminal in a wireless communication system. The terminal may comprise: a transceiver; and a controller configured to control to: transmit, to a profile server, a request message including a confirmation request on whether obtainment of an activation code for re-download of a first profile installed in the terminal is possible through the transceiver, and receive, from the profile server, as a response to the request message, a response message including information indicating whether obtainment of an activation code for re-download for a profile installed in the terminal is possible.

Meanwhile, according to another embodiment of the present disclosure, there is provided a profile server in a wireless communication system. The profile server may comprise: a transceiver; and a controller configured to control to: receive, from a terminal, a request message including a confirmation request on whether obtainment of an activation code for re-download of a first profile installed in the terminal is possible through the transceiver, and transmit, to the terminal, as a response to the request message, a response message including information indicating whether obtainment of an activation code for re-download for a profile installed in the terminal is possible.

### [Advantageous Effects]

According to an embodiment of the present invention, services may be effectively provided in a mobile communication system.

According to an embodiment of the present invention, when a terminal intends to re-install a profile installed in the terminal to the same or another terminal in a communication system, the terminal may request and receive confirmation on whether an activation code required for re-installation of the profile may be issued from a profile server.

According to an embodiment of the present invention, when a profile server receives, from a terminal, a request for confirming whether an activation code required for re-installing a profile installed in the terminal to the same or another terminal may be issued from the profile server in a communication system, the profile server may deliver whether issuance of the activation code for the re-installation of the corresponding profile is possible to the terminal.

The effects obtained by the present invention are not limited to the aforementioned effects, and other effects, which are not mentioned above, will be clearly understood by those skilled in the art to which the present disclosure pertains from the following description.

### [Description of Drawings]

FIG. 1 is a view illustrating a method for a terminal to connect to a mobile communication network by using a universal integrated circuit card (UICC) in which a fixed profile is mounted, according to an embodiment of the present disclosure.

FIG. 2 is a view illustrating a configuration of a system in which a terminal manages a profile installed in a first terminal and installs the profile in a second terminal according to a user input, according to an embodiment of the present disclosure.

FIG. 3 is a view illustrating an example of a procedure between a first terminal and a server for confirming whether the first terminal and a profile server provide a function (activation code retrieval) for the first terminal to request and obtain, from the profile server, an activation code for re-downloading a profile installed in the terminal to the first terminal or a second terminal, according to an embodiment of the present disclosure.

FIG. 4 is a view illustrating an example of a procedure among a first terminal 410, a second terminal, and a profile server 430 for confirming whether a specific profile installed in the first terminal 410 is re-downloadable to the first terminal or the second terminal through the profile server 430, according to an embodiment of the present disclosure.

FIG. 5 is a view illustrating an example of a procedure among a first terminal 410, a second terminal, and a profile server 430 for confirming whether a specific profile installed in the first terminal 410 is re-downloadable to the first terminal or the second terminal through the profile server 430, according to an embodiment of the present disclosure.

FIG. 6 is a block diagram illustrating constituent elements of a terminal, according to an embodiment of the present disclosure.

FIG. 7 is a block diagram illustrating constituent elements of a profile server, according to an embodiment of the present disclosure.

### [Mode for Disclosure]

Hereinafter, embodiments of the present disclosure will be described in detail with reference to the accompanying drawings.

When describing the embodiments, a description of technical contents, which are well known in the technical field to which the present disclosure pertains but are not directly related to the present disclosure, will be omitted. This is to more clearly describe the subject matter of the present disclosure without obscuring the subject matter by omitting any unnecessary description.

Similarly, in the accompanying drawings, some constituent elements are illustrated in an exaggerated or schematic form or are omitted. In addition, a size of each constituent element does not entirely reflect an actual size. Like reference numerals designate like or corresponding constituent elements in the drawings.

Advantages and features of the present disclosure and methods of achieving the advantages and features will be clear with reference to exemplary embodiments described in detail below together with the accompanying drawings. However, the present disclosure is not limited to the exemplary embodiments disclosed herein but will be implemented in various forms. The exemplary embodiments of the present disclosure are provided so that the present disclosure is completely disclosed, and a person with ordinary skill in the art can fully understand the scope of the present disclosure. The present disclosure will be defined only by the scope of the appended claims. Throughout the disclosure, the same reference numerals denote the same constituent elements.

In this case, it will be understood that each block of processing flowchart illustrations and combination of flowchart illustrations may be performed by computer program instructions. These computer program instructions may be incorporated into a processor of a general purpose computer, a special purpose computer, or other programmable data processing equipment, such that the instructions executed by the processor of the computer or other programmable data processing equipment create means for performing the functions described in the flowchart block(s). These computer program instructions may also be stored in a computer usable or computer-readable storage medium that can direct a computer or other programmable data processing apparatus to function in a particular manner, such that the instructions stored in the computer usable or computer-readable storage medium produce an article of manufacture including instruction means that performs the function described in the flowchart block(s). The computer program instructions may also be loaded onto a computer or other programmable data processing apparatus to cause a series of operational steps to be performed on the computer or other programmable apparatus to produce a computer implemented process such that the instructions that execute on the computer or other programmable apparatus may provide steps for implementing the functions described in the flowchart block(s).

In addition, each block may represent a module, segment, or portion of code that includes one or more executable instructions for executing a specified logical function(s). Additionally, it should be noted that it is possible for the functions mentioned in the blocks to occur out of order in some alternative execution examples. For example, two blocks illustrated in succession may in fact be performed substantially simultaneously, or the blocks may sometimes be performed in a reverse order depending on the corresponding function.

In this case, the term such as a "unit" or a "portion" used in the present embodiments means a software constituent element or a hardware constituent element such as FPGA or ASIC, and the "unit" or the "portion" performs a certain role. However, the term 'unit', 'part', or 'portion' is not limited to software or hardware. The term 'unit', 'part', or 'portion' may be configured to be in an addressable storage medium or configured to reproduce one or more processors. Thus, as an example, the term 'unit', 'part', or 'portion' includes constituent elements such as software constituent elements, object-oriented software constituent elements, class constituent elements, and task constituent elements, processes, functions, properties, procedures, subroutines, segments of program codes, drivers, firmware, microcode, circuitry, data, database, data structures, tables, arrays, and variables. The functions provided in the constituent elements and the term, 'units', 'parts', or 'portions' may be combined into a smaller number of constituent elements, 'units', 'parts', and 'portions' or divided into additional constituent elements, and 'units', 'parts', or 'portions'. In addition, the constituent elements and 'units', 'parts', or 'portions' may be implemented to execute one or more CPUs within a device or secure multimedia card.

Specific terms used in the following description are provided to help understanding of the present disclosure, and use of these specific terms may be changed into other forms within a range not departing from the technical teachings of the present disclosure.

A universal integrated circuit card (UICC) is a smart card used by being inserted into a mobile communication terminal or the like, and is also referred to as a UICC card. An access control module for a terminal to access a network of a mobile communication business operator may be included in the UICC. Examples of such an access control module include a universal subscriber identity module (USIM), a subscriber identity module (SIM), an IP multimedia service identity module (ISIM), and the like. A UICC in which a USIM is included is also commonly referred to as a USIM card. Likewise, a UICC in which a SIM module is included is also commonly referred to as a SIM card.

Among UICC cards, a UICC used by being fixed to a terminal is referred to as an embedded UICC (eUICC), and commonly, the eUICC means a UICC card used by being fixed to a terminal and capable of selecting a SIM module by downloading the SIM module remotely. In addition, downloaded SIM module information is collectively referred to as an eUICC profile, or more simply, a profile.

In the present disclosure, a universal integrated circuit card (UICC) is a smart card used by being inserted into a mobile communication terminal or the like and is also called a UICC card.

The UICC means a chip in which personal information such as network access authentication information, a phone book, and SMS of a mobile communication subscriber is stored to perform subscriber authentication and traffic security key generation upon accessing a mobile communication network such as GSM, WCDMA, LTE, and the like, thereby enabling safe mobile communication use.

A communication application or an access control module for a terminal to access a network of a mobile communication business operator may be included in the UICC. Examples of such a communication application or an access control module include a universal subscriber identity module (USIM), a subscriber identity module (SIM), an IP multimedia service identity module (ISIM), and the like. In addition, the UICC may provide a high-level security function for mounting of various applications such as an electronic wallet, ticketing, an electronic passport, and the like.

A UICC in which a USIM is included is also commonly called a USIM card. Likewise, a UICC in which a SIM module is included is also commonly called a SIM card.

In the present disclosure, "SIM card", "UICC card", "USIM card", and "UICC including an ISIM" may be used with the same/similar meaning. For example, contents of the present disclosure may be identically applied to a SIM card, a USIM card, an ISIM card, or a general UICC card.

The SIM card stores personal information of a mobile communication subscriber, and performs subscriber authentication and traffic security key generation upon accessing a mobile communication network to enable safe mobile communication use.

Generally, the SIM card is manufactured as a dedicated card for a corresponding business operator by a request of a specific mobile communication business operator, and authentication information for network access of the corresponding business operator, for example, a universal subscriber identity module (USIM) application and an international mobile subscriber identity (IMSI), a K value, an OPc value, and the like are mounted on the card in advance and shipped. Accordingly, the SIM card is delivered to and provided to a subscriber by a mobile communication business operator, and thereafter, management such as installation, modification, and deletion of an application within the UICC may also be performed by utilizing technology such as over the air (OTA) as needed. A subscriber may use a network and an application service of a mobile communication business operator by inserting a UICC card into a mobile communication terminal possessed, and by moving and inserting the UICC card from an existing terminal into a new terminal upon terminal replacement, authentication information, a mobile communication phone number, a personal phone book, and the like stored in the UICC card may be used in the new terminal as they are.

However, the SIM card has inconvenient points in that a mobile communication terminal user receives a service of another mobile communication business operator. A mobile communication terminal user has inconvenience of having to physically obtain a SIM card to receive a service from a mobile communication business operator. For example, when traveling to another country, there is inconvenience of having to obtain a local SIM card to receive a local mobile communication service. In the case of a roaming service, the inconvenience is solved to some extent, but charges are relatively expensive, and there is also a problem that a service cannot be received in case that a contract between communication companies is not made.

Meanwhile, in the case where a SIM module is remotely downloaded and installed in a UICC card, such inconvenience may be largely solved. For example, a SIM module of a mobile communication service to be used may be downloaded to a UICC card at a time point desired by a user. Such a UICC card may also be used in a method of downloading and installing a plurality of SIM modules, and selecting only one SIM module among them. Such a UICC card may or may not be fixed to a terminal. In particular, a UICC used by being fixed to a terminal is referred to as an embedded UICC (eUICC), and commonly, the eUICC means a UICC card used by being fixed to a terminal and capable of selecting a SIM module by downloading the SIM module remotely. In the present disclosure, a UICC card capable of selecting a SIM module by downloading it remotely is referred to as an eUICC. For example, among UICC cards capable of selecting a SIM module by downloading it remotely, UICC cards that are fixed or not fixed to a terminal are collectively used as an eUICC. In addition, downloaded SIM module information is collectively used as a term of an eUICC profile, or more simply, a profile.

In the present disclosure, an embedded UICC (eUICC) is a security module in a form of a chip embedded in a terminal, not a detachable type that is capable of being inserted into and removed from the terminal. The eUICC may be used by being fixed to a terminal. Meanwhile, the eUICC may download and install a profile by using over the air (OTA) technology. The eUICC may be named as a UICC capable of profile download and installation.

In the present disclosure, a method of downloading and installing a profile by using OTA technology in an eUICC may also be applied to a detachable UICC capable of being inserted into and removed from a terminal. For example, an embodiment of the present disclosure may be applied to a UICC capable of downloading and installing a profile by using OTA technology.

In the present disclosure, "UICC" may be used interchangeably with "SIM", and "eUICC" may be used interchangeably with "eSIM".

In the present disclosure, "profile" may mean packaging of an application, a file system, an authentication key value, and the like stored in a UICC in a form of software.

In the present disclosure, "USIM profile" may have the same meaning as "profile" or may mean packaging of information included in a USIM application within a profile in a form of software.

In the present disclosure, an operation in which a terminal activates (enables) a profile may mean an operation of changing a state of a corresponding profile to an activated (enabled) state and setting the terminal to receive a communication service through a communication business operator that has provided the corresponding profile. A profile in an activated state may be expressed as an "activated profile (enabled profile)".

In the present disclosure, an operation in which a terminal deactivates (disables) a profile may mean an operation of changing a state of a corresponding profile to a deactivated (disabled) state and setting the terminal not to receive a communication service through a communication business operator that has provided the corresponding profile. A profile in a deactivated state may be expressed as a "deactivated profile (disabled profile)".

In the present disclosure, an operation in which a terminal deletes a profile may mean an operation of changing a state of a corresponding profile to a deleted state and setting the terminal no longer to be able to activate or deactivate the corresponding profile. A profile in a deleted state may be expressed as a "deleted profile".

In the present disclosure, an operation in which a terminal activates (enables), deactivates (disables), or deletes a profile may mean an operation of not immediately changing a state of each profile to an activated (enabled) state, a deactivated (disabled) state, or a deleted state, but firstly only marking each profile as a state to be enabled, a state to be disabled, or a state to be deleted, and changing each profile to an activated (enabled) state, a deactivated (disabled) state, or a deleted state after the terminal or a UICC of the terminal performs a specific operation (for example, execution of a refresh or reset command). An operation of marking a specific profile as a scheduled state (for example, a state to be enabled, a state to be disabled, or a state to be deleted) is not necessarily limited to marking one scheduled state for one profile, and it is also possible to mark one or more profiles as scheduled states that are the same as or different from each other, or to mark one profile as one or more scheduled states, or to mark one or more profiles as one or more scheduled states that are the same as or different from each other.

In addition, when a terminal marks one or more scheduled states for an arbitrary profile, two scheduled state markings may be integrated into one. For example, when an arbitrary profile is marked as a state to be disabled and a state to be deleted, the corresponding profile may be integratedly marked as a state to be disabled and deleted.

In addition, an operation in which a terminal marks a scheduled state for one or more profiles may be performed sequentially or simultaneously. In addition, an operation in which a terminal marks a scheduled state for one or more profiles and thereafter changes a state of an actual profile may be performed sequentially or simultaneously.

In the present disclosure, "profile provision server" may include functions of generating a profile, encrypting a generated profile, generating a remote profile management command, or encrypting a generated remote profile management command. The profile provision server may be expressed as a subscription manager data preparation (SM-DP), a subscription manager data preparation plus (SM-DP+), an off-card entity of profile domain, a profile encryption server, a profile generation server, a profile provisioner (PP), a profile provider, or a profile provisioning credentials holder (PPC holder).

In the present disclosure, "profile management server" may include a function of managing a profile. The profile management server may be expressed as a subscription manager secure routing (SM-SR), a subscription manager secure routing plus (SM-SR+), an off-card entity of eUICC profile manager or a profile management credentials holder (PMC holder), an eUICC manager (EM), a profile manager (PP), and the like.

In the present disclosure, a profile provision server may also mean integration of functions of a profile management server. Accordingly, in various embodiments of the present disclosure, an operation of a profile provision server may also be performed in a profile management server. Likewise, an operation of a profile management server or an SM-SR may also be performed in a profile provision server.

In the present disclosure, "opening mediation server" may be expressed as a subscription manager discovery service (SM-DS), a discovery service (DS), a root opening mediation server (root SM-DS), or an alternative opening mediation server (alternative SM-DS). The opening mediation server may receive an event registration request (register event request, event register request) from one or more profile provision servers or opening mediation servers. In addition, one or more opening mediation servers may be used complexly, and in this case, a first opening mediation server may receive an event registration request from not only a profile provision server but also a second opening mediation server.

In the present disclosure, a profile provision server and an opening mediation server may be used with a name of "remote SIM provisioning (RSP) server". The RSP server may be expressed as a subscription manager XX (SM-XX).

In the present disclosure, "terminal" may be referred to as a mobile station (MS), user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. In an embodiment, a terminal may include portable units or terminals integrating cellular telephones, smartphones having a wireless communication function, personal digital assistants (PDAs) having a wireless communication function, wireless modems, portable computers having a wireless communication function, photographing apparatuses such as digital cameras having a wireless communication function, gaming devices having a wireless communication function, music storage and playback home appliances having a wireless communication function, Internet home appliances capable of wireless Internet access and browsing, as well as combinations of such functions. In addition, a terminal may include a machine to machine (M2M) terminal, a machine type communication (MTC) terminal/device, but is not limited thereto. In the present disclosure, a terminal may also be referred to as an electronic device.

In the present disclosure, "electronic device" may have a UICC embedded therein, which is capable of downloading and installing a profile. When a UICC is not embedded in an electronic device, the UICC physically separated from the electronic device may be inserted into the electronic device and connected to the electronic device. For example, a UICC in a form of a card may be inserted into an electronic device. An electronic device may include a terminal. In this case, the terminal may be a terminal including a UICC capable of downloading and installing a profile. Not only may a UICC be embedded in a terminal, but also in a case where the terminal and the UICC are separated, the UICC may be inserted into the terminal, and may be inserted into the terminal and connected to the terminal. A UICC capable of downloading and installing a profile may be referred to as, for example, an eUICC.

In the present disclosure, a terminal or an electronic device may include software or an application installed within the terminal or the electronic device to control a UICC or an eUICC. Software or an application installed within a terminal or an electronic device to control a UICC or an eUICC may be referred to as, for example, a local profile assistant (LPA).

In the present disclosure, "profile separator" may be referred to as a factor matching a profile identifier (profile ID), an integrated circuit card ID (ICCID), a matching ID, an event identifier (event ID), an activation code, an activation code token, a command code, a command code token, a signed command code, an unsigned command code, an ISD-P, or a profile domain (PD). The profile identifier (profile ID) may represent a unique identifier of each profile. The profile separator may further include an address of a profile provision server (SM-DP+) capable of indexing a profile. In addition, the profile separator may further include a signature of the profile provision server (SM-DP+).

In the present disclosure, "eUICC identifier (eUICC ID)" may be a unique identifier of an eUICC embedded in a terminal, and may be referred to as an EID. In addition, in a case where a provisioning profile is pre-mounted on an eUICC, the eUICC identifier (eUICC ID) may be an identifier of a corresponding provisioning profile (profile ID of provisioning profile). In addition, in an embodiment of the present disclosure, in a case where a terminal and an eUICC chip are not separated, an eUICC identifier (eUICC ID) may be a terminal ID. In addition, an eUICC identifier (eUICC ID) may also refer to a specific security domain of an eUICC chip.

In the present disclosure, "profile container" may be named as a profile domain. The profile container may be a security domain.

In the present disclosure, "application protocol data unit (APDU)" may be a message for a terminal to interwork with an eUICC. In addition, the APDU may be a message for a profile provider (PP) or a profile manager (PM) to interwork with an eUICC.

In the present disclosure, "profile provisioning credentials (PPC)" may be a means used to perform mutual authentication, profile encryption, and signing between a profile provision server and an eUICC. The PPC may include one or more of a symmetric key, a Rivest Shamir Adleman (RSA) certificate and a private key, an elliptic curved cryptography (ECC) certificate and a private key, a root certification authority (root CA), and a certificate chain. In addition, in a case where there are a plurality of profile provision servers, different PPCs for each of the plurality of profile provision servers may be stored in or used in an eUICC.

In the present disclosure, "profile management credentials (PMC)" may be a means used to perform mutual authentication, transmission data encryption, and signing between a profile management server and an eUICC. The PMC may include one or more of a symmetric key, an RSA certificate and a private key, an ECC certificate and a private key, a root CA, and a certificate chain. In addition, in a case where there are a plurality of profile management servers, different PMCs for each of the plurality of profile management servers may be stored in or used in an eUICC.

In the present disclosure, "AID" may be an application identifier. This value may be a separator distinguishing different applications within an eUICC.

In the present disclosure, "event" may be a term collectively referring to profile download, remote profile management, or other management/processing commands of a profile or an eUICC. An event may be named as a remote SIM provisioning operation (or RSP operation) or an event record, and each event may be referred to as data including at least one of a corresponding event identifier (event identifier, event ID, eventID) or a matching identifier (matching identifier, matching ID, matchingID), an address (FQDN, IP address, or URL) of a profile provision server (SM-DP+) or an opening mediation server (SM-DS) where the corresponding event is stored, a signature of the profile provision server (SM-DP+) or the opening mediation server (SM-DS), and a digital certificate of the profile provision server (SM-DP+) or the opening mediation server (SM-DS).

Data corresponding to an event may be referred to as a "command code". A part or all of a procedure using a command code may be referred to as a "command code processing procedure", a "command code procedure", or a "local profile assistant application programming interface (LPA API)". Profile download may be used interchangeably with profile installation.

In addition, "event type" may be used as a term representing whether a specific event is profile download, remote profile management (for example, deletion, activation, deactivation, replacement, update, etc.), or other profile or eUICC management/processing commands, and may be named as an operation type (Operation Type or Operation Type), an operation class (Operation Class or OperationClass), an event request type, an event class, an event request class, and the like. An arbitrary event identifier (eventID or matchingID) may have a path from which a terminal has obtained the corresponding event identifier (eventID or matchingID) or a use purpose (eventID source or matchingID source) designated.

In the present disclosure, "profile package" may be used interchangeably with a profile or used as a term representing a data object of a specific profile, and may be named as a profile TLV or a profile package TLV. In a case where a profile package is encrypted using an encryption parameter, it may be named as a protected profile package (PPP) or a protected profile package TLV (PPP TLV). In a case where a profile package is encrypted using an encryption parameter decryptable only by a specific eUICC, it may be named as a bound profile package (BPP) or a bound profile package TLV (BPP TLV). The profile package TLV may be a data set representing information configuring a profile in a tag, length, value (TLV) form.

In the present disclosure, "local profile management (LPM)" may be named as profile local management, local management, a local management command, a local command, a local profile management package (LPM package), a profile local management package, a LOCAL MANAGEMENT PACKAGE, a local management command package, or a local command package. The LPM may be used for a purpose of changing a state (enabled, disabled, deleted) of a specific profile through software or the like installed in a terminal, or updating contents of a specific profile (for example, a profile nickname, profile summary information (profile metadata), etc.). The LPM may also include one or more local management commands, and in a case where the LPM includes one or more local management commands, a profile which is a target of each local management command may be the same as or different from each other for each local management command.

In the present disclosure, "remote profile management (RPM)" may be named as profile remote management, remote management, a remote management command, a remote command, a remote profile management package (RPM package), a profile remote management package, a remote management package, a remote management command package, or a remote command package. The RPM may be used for a purpose of changing a state (enabled, disabled, deleted) of a specific profile, or updating contents of a specific profile (for example, a profile nickname, profile summary information (profile metadata), etc.). The RPM may also include one or more remote management commands, and in this case, a profile which is a target of each remote management command may be the same as or different from each other for each remote management command.

In the present disclosure, "certificate" or "digital certificate" may represent a digital certificate used for mutual authentication based on an asymmetric key configured as a pair of a public key (PK) and a secret key (SK). Each certificate may include one or one or more public keys (PK), a public key identifier (PKID) corresponding to each public key, an identifier of a certificate issuer (CI) (certificate issuer ID) that has issued the corresponding certificate, and a digital signature.

In addition, "certificate issuer" may be named as a certification issuer, a certificate authority (CA), a certification authority, and the like.

In the present disclosure, "public key (PK)" and "public key ID (PKID)" may be used interchangeably with the same meaning referring to a specific public key or a certificate including the corresponding public key, a part of a specific public key or a part of a certificate including the corresponding public key, an operation result (for example, hash) value of a specific public key or an operation result (for example, hash) value of a certificate including the corresponding public key, an operation result (for example, hash) value of a part of a specific public key or an operation result (for example, hash) value of a part of a certificate including the corresponding public key, or a storage space in which data are stored.

In the present disclosure, in a case where certificates (primary certificates) issued by one certificate issuer are used to issue another certificate (secondary certificate), or secondary certificates are used to associatively issue third or higher certificates, correlation of the corresponding certificates may be named as a certificate chain or a certificate hierarchy, and in this case, a CI certificate used for initial certificate issuance may be named as a root of certificate, a top-level certificate, a root CI, a root CI certificate, a root CA, a root CA certificate, and the like.

In the present disclosure, "communication business operator (or mobile communication business operator, mobile operator)" may represent a business entity providing a communication service to a terminal, and may collectively refer to a business supporting system (BSS), an operational supporting system (OSS), a point of sale (POS) terminal, and other IT systems of the mobile operator. In addition, in the present disclosure, a mobile operator is not limited to expressing only one specific business entity providing a communication service, and may also be used as a term referring to a group or an association (or consortium) of one or more business entities, or an agency (or representative) representing the corresponding group or association. In addition, in the present disclosure, a mobile operator may be named as an operator (OP, or Op.), a mobile network operator (MNO), a mobile virtual network operator (MVNO), a service provider (or SP), a profile owner (PO), and the like, and each mobile operator may set or be allocated at least one of a name and/or a unique identifier (object identifier: OID) of the mobile operator. If a mobile operator refers to a group or an association or an agency of one or more business entities, a name or a unique identifier of an arbitrary group or association or agency may be a name or a unique identifier shared by all business entities belonging to the corresponding group or association, or all business entities cooperating with the corresponding agency.

In the present disclosure, "AKA" may represent authentication and key agreement, and may represent an authentication algorithm for accessing 3GPP and 3GPP2 networks.

In the present disclosure, "K" may be an encryption key value stored in an eUICC used for an AKA authentication algorithm.

In the present disclosure, "OPc" may be a parameter value capable of being stored in an eUICC used for an AKA authentication algorithm.

In the present disclosure, "NAA" is a network access application program, and may be an application program such as a USIM or an ISIM stored in a UICC to access a network. The NAA may be a network access module.

In the present disclosure, "indicator" may be used for a purpose of expressing that an arbitrary function, setting, or operation is required or not required, or may also be used for a purpose of expressing the corresponding function, setting, or operation itself. In addition, in the present disclosure, an indicator may be expressed in various forms such as an alphanumeric string, an operator representing true/false (boolean - TRUE or FALSE), a bitmap, an array, a flag, and the like, and other expression methods having the same meaning may be used interchangeably.

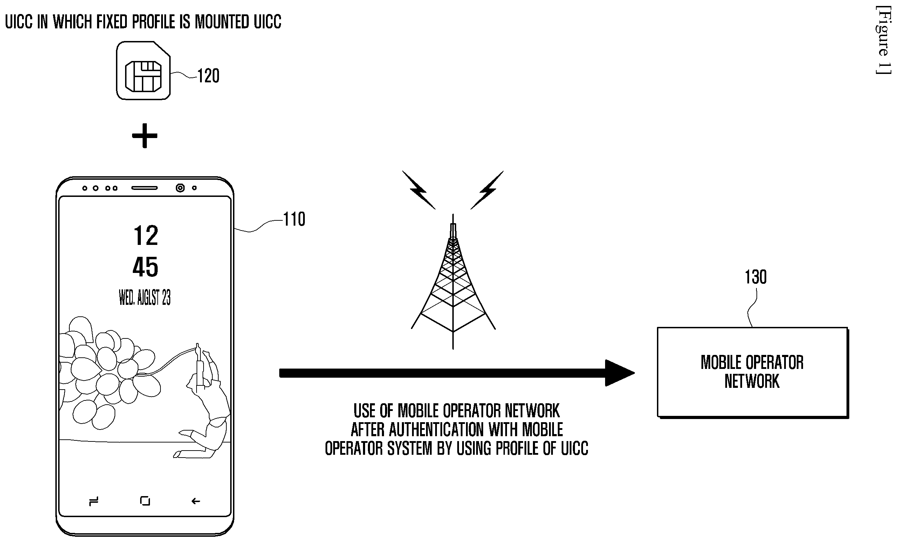

Hereinafter, a method and device for installing and managing an eUICC profile of the present disclosure will be described in detail with reference to FIG. 1 to FIG. 12.

FIG. 1 is a view illustrating a mobile communication network connection method of a terminal using a UICC in which a fixed profile is mounted, according to an embodiment of the present disclosure.

As illustrated in FIG. 1, a UICC 120 may be inserted into a terminal 110. For example, the UICC 120 may be a detachable type or may be pre-embedded in the terminal.

The fixed profile of the UICC in which the fixed profile is mounted means that "access information" capable of accessing a specific communication company is fixed. For example, the access information may be an IMSI which is a subscriber separator, and a K or Ki value required for authenticating to a network together with the subscriber separator.

The terminal 110 according to various embodiments may perform authentication with an authentication processing system (for example, a home location register (HLR) or an AuC) of a mobile communication business operator by using the UICC 120. For example, an authentication process may be an authentication and key agreement (AKA) process. When the terminal succeeds in authentication, the terminal may use a mobile communication service such as use of a phone or mobile data by using a mobile operator network 130 of a mobile communication system.

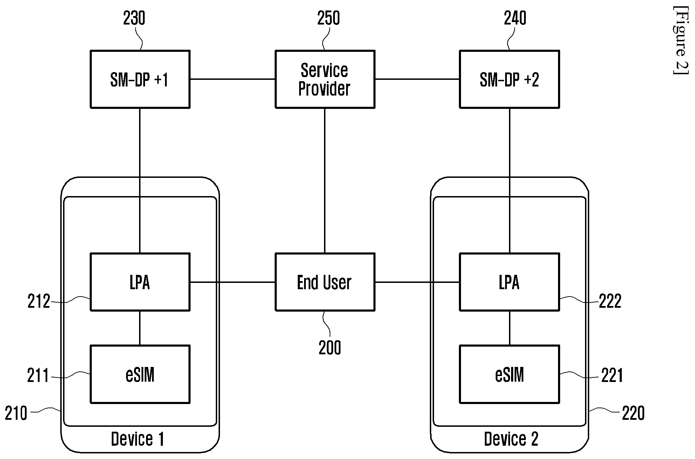

Meanwhile, FIG. 2 is a view illustrating a configuration of a system in which a terminal manages a profile installed in a first terminal and installs the profile in a second terminal according to a user input, according to an embodiment of the present disclosure.

As illustrated in FIG. 2, eSIMs 211 and 221 are mounted on each terminal 210 and 220, and a profile (not illustrated) may be installed in the eSIMs 211 and 221. In addition, LPAs 212 and 222 may be installed in each terminal 210 and 220. The eSIMs 211 and 221 may be under control of the LPAs 212 and 222. A user 200 may control a profile installed in the eSIMs 211 and 221 of each terminal 210 and 220 through the LPAs 212 and 222.

The user 200 may be provided with a communication service from a service provider (hereinafter, "communication business operator" or "business operator" 250). For provision of the communication service, a profile (not illustrated) of the business operator 250 may be installed in the first terminal 210. For example, when the user 200 newly purchases the second terminal 220, the user 200 may attempt to re-install the profile installed in the first terminal 210 in the second terminal 220.

The business operator 250 may be connected to a first profile server 230 and a second profile server 240. The LPA 212 of the first terminal 210 may be connected to the first profile server 230. The LPA 222 of the second terminal 220 may be connected to the second profile server 240. In this case, the first profile server 230 and the second profile server 240 may be the same as or different from each other. In addition, in a case where one or more business operator servers are included in the configuration, each business operator server may be connected to each separate profile server, or at least one business operator server may be connected to the same profile server. In addition, although FIG. 2 illustrates a case where each of the profile servers 230 and 240 is configured as a single server for convenience, one or more profile servers (SM-DP+) may be included in a server configuration according to implementation and embodiments. It should be noted that such configurations of various servers may be simply denoted as a single profile server in the following drawings.

Detailed operations and a message exchange procedure of the user 200, the business operator 250, the terminals 210 and 220, the eSIMs 211 and 221, the LPAs 212 and 222, and the profile servers 230 and 240 according to an embodiment of the present disclosure will be examined in detail with reference to drawings to be described later.

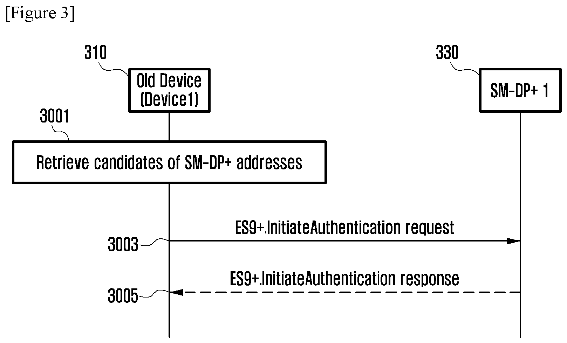

FIG. 3 is a view illustrating an example of a procedure between a first terminal and a server for confirming whether the first terminal and a profile server provide a function (activation code retrieval) for the first terminal to request and obtain, from the profile server, an activation code for re-downloading a profile installed in the terminal to the first terminal or a second terminal, according to an embodiment of the present disclosure.

According to an embodiment of the present disclosure, a first terminal 310 illustrated in FIG. 3 may provide whether it supports a function (activation code retrieval) for requesting and obtaining an activation code for profile re-download for an installed profile from a profile server 330. It is a view illustrating a procedure in which the profile server 330 also provides the first terminal 310 with whether the profile server 330 supports a function (activation code retrieval) for processing a request for an activation code for profile re-download and providing the activation code.

For configurations and descriptions of the first terminal 310, the profile server 330, and a business operator (not illustrated) in FIG. 3, contents of FIG. 2 described above will be referred to. For example, the first terminal 310 and the profile server 330 illustrated in FIG. 3 may correspond to the first terminal 210 and the first profile server 230 of FIG. 2, respectively.

With reference to FIG. 3, in step 3001, the first terminal 310 may determine an address of a profile server to request an activation code for re-download of a specific profile installed in the terminal. The address of the profile server may be determined by at least one of the following methods, and the address of the profile server determined by the first terminal 310 may be one or more.
- An address of a profile server used when a specific profile was downloaded to the first terminal 310
- A notification address (NotificationAddress) to which a notification set in notification configuration information (NotificationConfigurationInfo) of a specific profile is to be delivered. The address may be an address to which a deletion notification is to be delivered upon occurrence of a profile deletion event.
- A profile server address obtained through a server operated by a manufacturer of the first terminal 310 or an external organization
- Besides, a profile server address stored in a storage space within the first terminal 310, an LPA (not illustrated) installed in the first terminal 310, an eSIM (not illustrated), or a profile (not illustrated)

In addition, in step 3001, when an address of a profile server to request an activation code for re-download of a specific profile installed in the first terminal 310 cannot be determined, the first terminal 310 may selectively set a state of the corresponding profile to re-download impossible. The re-download impossible state setting may be set in a storage space within the first terminal 310, an LPA (not illustrated) installed in the first terminal 310, an eSIM (not illustrated), or a profile (not illustrated). In addition, a re-download menu of the corresponding profile may not be shown on a display or a user interface of the terminal 310, or it may be expressed in an inaccessible state so that a user (not illustrated) cannot select the re-download menu of the corresponding profile.

In step 3003, the first terminal 310 may start a mutual authentication process with the profile server 330. The mutual authentication start request may be requested by the first terminal 310 to the profile server 330 by using an ES9+.InitiateAuthentication function. The mutual authentication start request may selectively include at least one of information (euiccInfo1) of an eSIM (not illustrated) installed in the first terminal 310, information (lpaRspCapability) of an LPA (not illustrated), or an indicator (activation code retrieval support) indicating whether the LPA (not illustrated) supports a function (activation code retrieval) for requesting and obtaining an activation code for profile re-download. The indicator indicating whether the LPA (not illustrated) of the first terminal 310 supports a function (activation code retrieval) for requesting and obtaining an activation code for profile re-download may be included in the information (lpaRspCapability) of the LPA (not illustrated), or may be included in the mutual authentication start request independently from the information (lpaRspCapability) of the LPA (not illustrated). In step 3005, the profile server 330 may deliver a mutual authentication start response corresponding to the mutual authentication start request of the first terminal 310 to the first terminal 310. The mutual authentication start response may be an ES9+.InitiateAuthentication response. The mutual authentication start response may include at least one of a TransactionId, information (serverRspCapability or sessionContext) of the profile server 330, or an indicator (activation code retrieval support) indicating whether the profile server 330 supports a function (activation code retrieval) for processing a request for an activation code for profile re-download and providing the activation code. The indicator (activation code retrieval support) indicating whether the profile server 330 supports the function (activation code retrieval) for processing the request for the activation code for profile re-download and providing the activation code may be included in the information (serverRspCapability or sessionContext) of the profile server 330 or may be independently included in the mutual authentication start response. In addition, the information may include a signature generated by the profile server 330, a digital certificate of the profile server 330 capable of verifying it, and a corresponding certificate chain.

In step 3005, the first terminal 310 having received the mutual authentication start response of the profile server 330 may selectively and repeatedly perform the process from step 3003 for an address of another profile server determined in step 3001, or stop the process progress, when the profile server 330 does not support the function (activation code retrieval) for processing the request for the activation code for profile re-download and providing the activation code.

In addition, when the function (activation code retrieval) for processing the request for the activation code for profile re-download and providing the activation code is not supported for at least one or all of the addresses of the profile servers determined in step 3001, the first terminal 310 may selectively set a state of the corresponding profile to re-download impossible. The re-download impossible state setting may be set in a storage space within the first terminal 310, an LPA (not illustrated) installed in the first terminal 310, an eSIM (not illustrated), or a profile (not illustrated). In addition, a re-download menu of the corresponding profile may not be shown on a display or a user interface of the first terminal 310, or it may be expressed in an inaccessible state so that a user (not illustrated) cannot select the re-download menu of the corresponding profile.

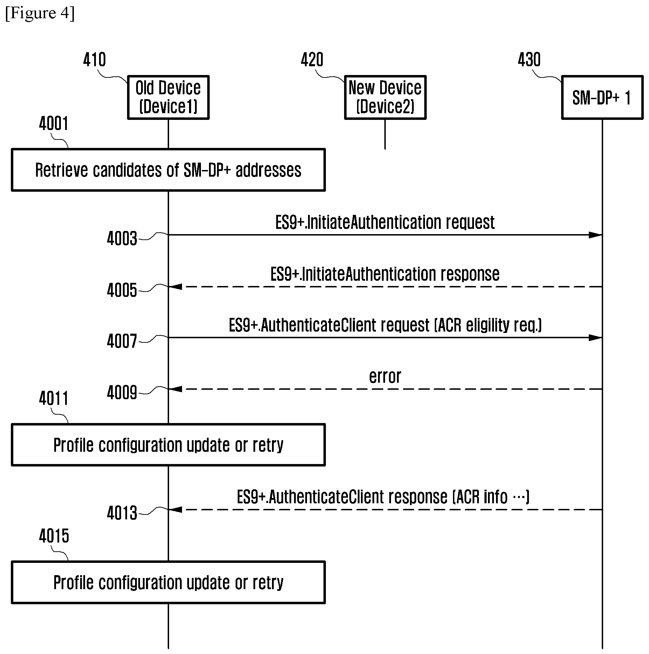

FIG. 4 is a view illustrating an example of an operation of a procedure among a first terminal 410, a second terminal 420, and a profile server 430 for confirming whether a specific profile installed in the first terminal 410 is re-downloadable to the first terminal or the second terminal through the profile server 430, according to an embodiment of the present disclosure.

For configurations and descriptions of the first terminal 410, the second terminal 420, and the profile server 430 in FIG. 4, contents of FIG. 2 described above will be referred to. For example, the first terminal 410, the second terminal 420, and the profile server 430 may correspond to the first terminal 210, the second terminal 220, and the first profile server 230 of FIG. 2, respectively.

With reference to FIG. 4, in step 4001, the first terminal 410 may determine an address of a profile server to request an activation code for re-download of a specific profile installed in the terminal. Step 4001 may refer to step 3001 of FIG. 3.

With reference to FIG. 4, in step 4003, the first terminal 410 may start a mutual authentication process with the profile server 430. The mutual authentication start request may be requested by the first terminal 410 to the profile server 430 by using an ES9+.InitiateAuthentication function. Step 4003 may refer to step 3003 of FIG. 3.

In step 4005, the profile server 430 may deliver a mutual authentication start response corresponding to the mutual authentication start request of the first terminal 410 to the first terminal 410. The mutual authentication start response may be an ES9+.InitiateAuthentication response. Step 4005 may refer to step 3005 of FIG. 3.

In step 4007, the first terminal 410 may request the profile server 430 to confirm whether an activation code request and obtainment for re-download of a first profile installed in the terminal is possible. The confirmation request may use an ES9+.AuthenticateClient function. The confirmation request may include at least one of an indicator (activation code retrieval eligibility check or availability check, ACRcheck, useMatchingIdForAcrEligiblityCheck, etc.) requesting to confirm whether an activation code request and obtainment for re-download of the first profile is possible, and a profile identifier (ICCID1) of the first profile. In addition, it may selectively include an eUICC identifier (EID2) installed in the second terminal 420 or a type allocation code (TAC2) of the second terminal 420. The confirmation request may be included in a ctxParams1, a ctxParamsForCommonAuthentication, or a matchingId data object, and the values may include a signature of an eSIM (not illustrated) installed in the first terminal 410, a digital certificate of the eSIM (not illustrated) capable of verifying it, and a corresponding certificate chain. In addition, the confirmation request may selectively include an indicator (activation code retrieval eligibility check or availability check, ACRcheck, etc.) requesting to confirm whether an activation code request and obtainment for re-download of the first profile is possible, or an indicator (useMatchingldForAcr) indicating that the matchingld data object is used for an activation code issuance processing request.

In step 4009, in a case where the profile server 430 cannot process the request for confirming whether the activation code request and obtainment for re-download of the first profile installed in the terminal delivered by the first terminal 410 is possible, the profile server 430 may reply with an error and a reason for the error to the first terminal 410. The case where the confirmation request cannot be processed may correspond to at least one of the following, but is not limited thereto.
- In a case where verification of the signature or certificate of the eSIM included in the request of step 4007 has failed
- In a case where the request for confirming whether the activation code request and obtainment for re-download of the first profile is possible cannot be interpreted
- In a case where the function (activation code retrieval) for processing the request for the activation code for profile re-download and providing the activation code is not supported
- In a case where the activation code request and obtainment for re-download of the first profile is impossible

When the error is received, the first terminal 410 may selectively perform step 4011. According to an embodiment, the first terminal 410 may selectively and repeatedly perform the process from step 4001 for an address of another profile server determined in step 4001, or stop the process progress. In addition, in a case where an error is received for at least one or all of the addresses of the profile servers determined in step 4001, the first terminal 410 may set a state of the first profile to re-download impossible. The re-download impossible state setting may be set in a storage space within the first terminal 410, an LPA (not illustrated) installed in the first terminal 410, an eSIM (not illustrated), or a profile (not illustrated). In addition, a re-download menu of the corresponding profile may not be shown on a display or a user interface of the first terminal 410, or it may be expressed in an inaccessible state so that a user (not illustrated) cannot select the re-download menu of the corresponding profile.

In step 4013, the profile server 430 may deliver a response to the request for confirming whether the activation code request and obtainment for re-download of the first profile of the first terminal 410 is possible to the first terminal 410. The confirmation request response may be an ES9+.AuthenticateClient response. The confirmation request response may include at least one of the following information.
- A first profile identifier (ICCID)
- An identifier indicating whether an activation code request processing and activation code provision for re-download of the first profile is possible
- An identifier indicating whether information of the second terminal 420 to which a profile is to be re-downloaded is required for the activation code request processing and the activation code provision for re-download of the first profile. According to an embodiment, the information of the second terminal 420 may selectively include at least one of an eUICC identifier installed in the corresponding terminal, and a type allocation code (TAC) of the corresponding terminal.
- At least one other profile server address capable of confirming whether an activation code request and obtainment for re-download of the first profile is possible or requesting an activation code
- Information on whether an activation code request and obtainment for re-download for at least one profile installed in the first terminal 410 is possible, excluding the first profile
- A business operator (not illustrated) message

The information included in the confirmation request response may be included in profile metadata, or may be independently included in the confirmation request response.

In addition, a part of the information included in the confirmation request response may be included in an activation code request and obtainment information (ActivationCodeRetrievalInfo) data object for re-download of the first profile, and may be included in the confirmation request response independently from the data object. In addition, the activation code request and obtainment information (ActivationCodeRetrievalInfo) data object for re-download of the first profile may be included in profile metadata, and may be included in the confirmation request response independently from the profile metadata.

When the confirmation request response is received, the first terminal 410 may selectively perform step 4015.

When the profile server 430 replies that the activation code request processing and the activation code provision for re-download of the first profile is possible, in step 4015, the first terminal 410 may set a state of the first profile to re-download possible. The re-download possible state setting may be set in a storage space within the first terminal 410, an LPA (not illustrated) installed in the first terminal 410, an eSIM (not illustrated), or a profile (not illustrated). In addition, a re-download menu of the corresponding profile may be shown on a display or a user interface of the first terminal 410, or it may be expressed in an accessible state so that a user (not illustrated) can select the re-download menu of the corresponding profile.

When it is replied that the activation code request processing and the activation code provision for re-download of the first profile is impossible, the first terminal 410 may selectively and repeatedly perform the process from step 4001 for an address of another profile server replied by the profile server 430 in step 4013 or an address of another profile server determined in step 4001, or stop the process progress. In addition, when the function (activation code retrieval) for processing the request for the first profile re-download activation code and providing the activation code is not supported for the at least one or all of the addresses of the profile servers, the first terminal 410 may set a state of the first profile to re-download impossible. The re-download impossible state setting may be set in a storage space within the first terminal 410, an LPA (not illustrated) installed in the first terminal 410, an eSIM (not illustrated), or a profile (not illustrated). In addition, a re-download menu of the corresponding profile may not be shown on a display or a user interface of the first terminal 410, or it may be expressed in an inaccessible state so that a user (not illustrated) cannot select the re-download menu of the corresponding profile.

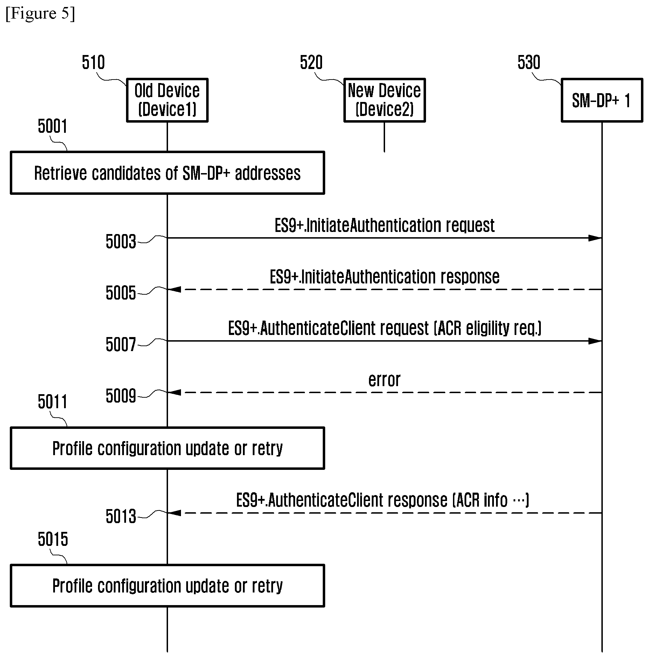

FIG. 5 is a view illustrating an example of a procedure among a first terminal, a second terminal, and a profile server for confirming whether a specific profile installed in the first terminal 510 is re-downloadable to the first terminal or the second terminal through the profile server 530, according to an embodiment of the present disclosure.

For configurations and descriptions of the first terminal 510, the second terminal 520, and the profile server 530 in FIG. 5, contents of FIG. 2 described above will be referred to. For example, the first terminal 510, the second terminal 520, and the profile server 530 may correspond to the first terminal 210, the second terminal 220, and the first profile server 230 of FIG. 2, respectively.

With reference to FIG. 5, in step 5001, the first terminal 510 may determine an address of a profile server to request an activation code for re-download of a specific profile installed in the terminal. Step 5001 may refer to step 3001 of FIG. 3.

With reference to FIG. 5, in step 5003, the first terminal 510 may start a mutual authentication process with the profile server 530. The mutual authentication start request may be requested by the first terminal 510 to the profile server 530 by using an ES9+.InitiateAuthentication function. Step 5003 may refer to step 3003 of FIG. 3.

In step 5005, the profile server 530 may deliver a mutual authentication start response corresponding to the mutual authentication start request of the first terminal 510 to the first terminal 510. The mutual authentication start response may be an ES9+.InitiateAuthentication response. Step 5005 may refer to step 3005 of FIG. 3.

In step 5007, the first terminal 510 may request the profile server 530 to confirm whether an activation code request and obtainment for re-download of a first profile installed in the first terminal 510 is possible. The confirmation request may use an ES9+.AuthenticateClient function. The confirmation request may include at least one of an activation code request indicator (activation code retrieval or ACR) for re-download of the first profile, and a profile identifier (ICCID1) of the first profile. In addition, it may selectively include an eUICC identifier (EID2) installed in the second terminal 520 into which a profile is to be moved, or a type allocation code (TAC2) of the second terminal 520. The confirmation request may be included in a ctxParams1, a ctxParamsForCommonAuthentication, or a matchingId data object, and the values may include a signature of an eSIM (not illustrated) installed in the first terminal 510, a digital certificate of the eSIM (not illustrated) capable of verifying it, and a corresponding certificate chain. In addition, the confirmation request may selectively include an indicator (activation code retrieval eligibility check or availability check, ACRcheck, useMatchingIdForAcr, useMatchingIdForAcrEligiblityCheck, etc.) requesting to confirm whether an activation code request and obtainment for re-download of the first profile is possible, or an indicator (useMatchingIdForAcr) indicating that the matchingId data object is used for an activation code issuance processing request.

In step 5009, in a case where the profile server 530 cannot process the request for confirming whether the activation code request and obtainment for re-download of the first profile installed in the terminal delivered by the first terminal 510 is possible, the profile server 530 may reply with an error and a reason for the error to the first terminal 510. Step 5009 may refer to step 4009 of FIG. 4.

When the error is received, the first terminal 510 may selectively perform step 5011. Step 5011 may refer to step 4011 of FIG. 4.

In step 5013, the profile server 530 may deliver a response to the request for confirming whether the activation code request and obtainment for re-download of the first profile of the first terminal 510 is possible to the first terminal 510. The confirmation request response may be an ES9+.AuthenticateClient response. Step 5013 may refer to step 4013 of FIG. 4.

When the confirmation request response is received, the first terminal 510 may selectively perform step 5015. Step 5015 may refer to step 4015 of FIG. 4.

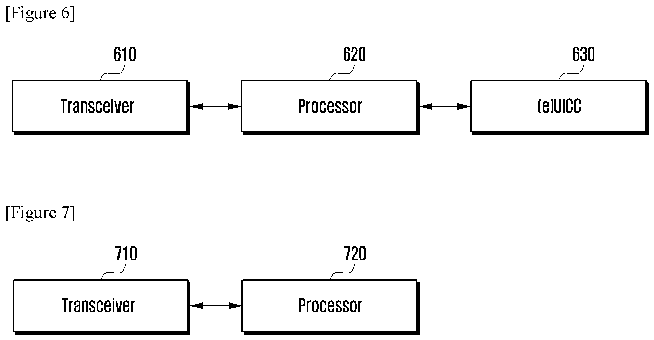

FIG. 6 is a block diagram illustrating constituent elements of a terminal, according to an embodiment of the present disclosure.

Each of terminals (for example, a first terminal and a second terminal) described in the present disclosure may correspond to the first terminal or the second terminal described in FIG. 2. The first terminal and the second terminal may be an embodiment of the terminal of FIG. 2, and expressions of "first" and "second" are only used to represent that each terminal is a physically different terminal.

As illustrated in FIG. 6, a terminal may include a transceiver 610 and a controller (processor) 620. In addition, the terminal may include a UICC 630. For example, the UICC 630 may be inserted into the terminal, and may be an eUICC embedded in the terminal.

The transceiver 610 may transmit and receive a signal, information, data, and the like with a profile server.

The transceiver 610 according to an embodiment of the present disclosure may transmit a message for requesting to confirm whether activation code issuance for profile re-installation is possible to a profile server, and may receive whether the activation code issuance is possible and additional information from the profile server.

Meanwhile, the processor 620 is a constituent element for overall controlling the terminal. The processor 620 may control overall operations of the terminal according to various embodiments of the present disclosure. The processor 620 may be named as a controller. According to an embodiment of the present disclosure, the processor 620 may include at least one processor.

The processor 620 according to an embodiment of the present disclosure may control the terminal to confirm an address of a profile server to transmit a request for confirming whether activation code issuance for profile re-installation is possible, to transmit a message for requesting to confirm whether the activation code issuance for the profile re-installation is possible to the profile server, and to receive whether the activation code issuance for the profile re-installation is possible from the profile server.

The UICC 630 according to an embodiment of the present disclosure may download a profile and install the profile. In addition, the UICC 630 may manage a profile.

The UICC 630 may operate according to control of the processor 620. Alternatively, the UICC 630 may include a processor or a controller for installing a profile, or an application may be installed therein. A part of the application may be installed in the processor 620.

Meanwhile, the terminal may further include a storage unit (not illustrated), and may store data such as a basic program, an application program, and setting information for an operation of the terminal. In addition, the storage unit may include at least one storage medium among a flash memory type, a hard disk type, a multimedia card micro type, a card type memory (for example, an SD or XD memory, etc.), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). In addition, the processor 620 may perform various operations by using various programs, contents, data, and the like stored in the storage unit.

FIG. 7 is a block diagram illustrating constituent elements of a profile server, according to an embodiment of the present disclosure.

Each of profile servers (for example, a first profile server and a second profile server) described in the present disclosure may correspond to the profile server described in FIG. 2. The first profile server and the second profile server may be an embodiment of the server of FIG. 2, and expressions of "first" and "second" are only used to represent that each profile server is a physically different profile server.

With reference to FIG. 7, a profile server may include a transceiver 710 and a controller (processor) 720.

The transceiver 710 may transmit and receive a signal, information, data, and the like with a terminal.

The transceiver 710 according to an embodiment of the present disclosure may receive a message for requesting to confirm whether activation code issuance for profile re-installation is possible from a terminal, and may transmit whether the activation code issuance is possible and additional information to the terminal.

Meanwhile, the processor 720 is a constituent element for overall controlling the profile server. The processor 720 may control overall operations of the profile server according to various embodiments of the present disclosure. The processor 720 may be named as a controller. According to an embodiment of the present disclosure, the processor 720 may include at least one processor.

The processor 720 according to an embodiment of the present disclosure may control the profile server to receive a message for requesting to confirm whether activation code issuance for profile re-installation is possible from a terminal, and to transmit whether the activation code issuance is possible and additional information to the terminal.

Meanwhile, the profile server may further include a storage unit (not illustrated), and may store data such as a basic program, an application program, and setting information for an operation of the profile server. In addition, the storage unit may include at least one storage medium among a flash memory type, a hard disk type, a multimedia card micro type, a card type memory (for example, an SD or XD memory, etc.), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). In addition, the processor 720 may perform various operations by using various programs, contents, data, and the like stored in the storage unit.

In the specific embodiments described above, a constituent element or constituent elements included in the present disclosure are expressed in a singular or plural form depending on the described embodiments. However, the singular or plural expression is appropriately selected for the situation proposed for the convenience of description, and the present disclosure is not limited by the singular or plural expression. Therefore, the constituent elements expressed with a plural term may be configured in a singular form, or the constituent element expressed with a singular term may be configured in a plural form.

While the detailed description of the present disclosure has described specific embodiments, it will be apparent that various modifications may be made without departing from the scope of the present disclosure. Therefore, the scope of the present disclosure should not be limited to the described embodiments, and should be defined by not only the claims to be described below, but also those equivalent to the claims.

Various embodiments of the present disclosure and terms used therein are not intended to limit the technology described in the present disclosure to specific embodiments, and should be understood to include various modifications, equivalents, and/or substitutes of the corresponding embodiments. In connection with the description of the drawings, the similar reference numerals may be used for the similar constituent elements. Singular expressions may include plural expressions unless clearly described as different meanings in the context. In the present disclosure, expressions such as "A or B", "at least one of A and/or B", "A, B or C", or "at least one of A, B and/or C" may include all possible combinations of items listed together. Expressions such as "first", "second", "1st", or "2nd" may modify corresponding constituent elements regardless of order or importance, and are only used to distinguish one constituent element from another constituent element and do not limit the corresponding constituent elements. When it is mentioned that a certain (e.g., first) constituent element is "(functionally or communicatively) connected to" or "coupled to" another (e.g., second) constituent element, the certain constituent element may be directly connected to another constituent element, or may be connected through another constituent element (e.g., a third constituent element).

The term "module" used in the present disclosure includes a unit configured as hardware, software, or firmware, and may be used interchangeably with terms such as, for example, logic, logic blocks, parts, or circuits. A module may be an integrally configured part or a minimum unit or a part thereof performing one or more functions. For example, a module may be configured as an application-specific integrated circuit (ASIC).

Various embodiments of the present disclosure may be implemented as software (e.g., a program) including instructions stored in machine-readable storage media (e.g., internal memory or external memory) readable by a machine (e.g., a computer). A machine is a device capable of calling stored instructions from a storage medium and operating according to the called instructions, and may include terminals (e.g., a first terminal 210, a second terminal 220) according to various embodiments of the present disclosure. In a case where an instruction is executed by a processor (e.g., the processor 620 of FIG. 6 or the processor 720 of FIG. 10), the processor may perform a function corresponding to the instruction directly or by using other constituent elements under control of the processor. The instruction may include code generated or executed by a compiler or an interpreter.

The machine-readable storage media may be provided in a form of non-transitory storage media. Here, 'non-transitory' only means that the storage medium does not include a signal and is tangible, and does not distinguish that data is semi-permanently or temporarily stored in the storage medium.

A method according to various embodiments disclosed in the present disclosure may be included and provided in a computer program product. The computer program product may be traded between a seller and a buyer as a product. The computer program product may be distributed in a form of a machine-readable storage medium (e.g., compact disc read only memory (CD-ROM)), or online through an application store (e.g., Play Store^{™}). In the case of online distribution, at least a part of the computer program product may be at least temporarily stored or temporarily generated in a storage medium such as memory of a server of a manufacturer, a server of an application store, or a relay server.

Each of constituent elements (e.g., a module or a program) according to various embodiments may be configured as a singular or a plurality of entities, and some sub-constituent elements among the aforementioned corresponding sub-constituent elements may be omitted, or other sub-constituent elements may be further included in various embodiments. Alternatively or additionally, some constituent elements (e.g., a module or a program) may be integrated into one entity to perform functions performed by each corresponding constituent element before being integrated identically or similarly. Operations performed by a module, a program, or another constituent element according to various embodiments may be executed sequentially, in parallel, iteratively, or heuristically, or at least some operations may be executed in another order, omitted, or other operations may be added.

## Claims

1. A method performed by a terminal in a wireless communication system, the method comprising:
transmitting, to a profile server, a request message comprising a confirmation request on whether obtainment of an activation code for re-download of a first profile installed in the terminal is possible; and
receiving, from the profile server, as a response to the request message, a response message comprising information indicating whether obtainment of an activation code for re-download for a profile installed in the terminal is possible.

2. The method of claim 1, wherein the request comprises at least one of an indicator indicating that the request requests confirmation of whether obtainment of an activation code for the re-download of the first profile is possible and a profile identifier of the first profile, and further comprises an indicator indicating that the request is used for an activation code issuance processing request.

3. The method of claim 1, wherein the information included in the response message is included in profile metadata.

4. The method of claim 1, further comprising:
transmitting, to the profile server, during a mutual authentication process between the terminal and the profile server, a request message comprising an indicator indicating whether a local profile assistant (LPA) of the terminal supports a function of requesting and obtaining an activation code for profile re-download.

5. A method performed by a profile server in a wireless communication system, the method comprising:
receiving, from a terminal, a request message comprising a confirmation request on whether obtainment of an activation code for re-download of a first profile installed in the terminal is possible; and
transmitting, to the terminal, as a response to the request message, a response message comprising information indicating whether obtainment of an activation code for re-download for a profile installed in the terminal is possible.

6. The method of claim 5, wherein the request comprises at least one of an indicator indicating that the request requests confirmation of whether obtainment of an activation code for the re-download of the first profile is possible and a profile identifier of the first profile, and further comprises an indicator indicating that the request is used for an activation code issuance processing request, and
wherein the information included in the response message is included in profile metadata.

7. The method of claim 5, further comprising:
receiving, from the terminal, during a mutual authentication process between the terminal and the profile server, a request message comprising an indicator indicating whether a local profile assistant (LPA) of the terminal supports a function of requesting and obtaining an activation code for profile re-download.

8. A terminal in a wireless communication system, the terminal comprising:
a transceiver; and
a controller configured to control to:
transmit, to a profile server, a request message comprising a confirmation request on whether obtainment of an activation code for re-download of a first profile installed in the terminal is possible through the transceiver, and
receive, from the profile server, as a response to the request message, a response message comprising information indicating whether obtainment of an activation code for re-download for a profile installed in the terminal is possible.

9. The terminal of claim 8, wherein the request comprises at least one of an indicator indicating that the request requests confirmation of whether obtainment of an activation code for the re-download of the first profile is possible and a profile identifier of the first profile, and further comprises an indicator indicating that the request is used for an activation code issuance processing request.

10. The terminal of claim 8, wherein the information included in the response message is included in profile metadata.

11. The terminal of claim 8, further comprising:
transmitting, to the profile server, during a mutual authentication process between the terminal and the profile server, a request message comprising an indicator indicating whether a local profile assistant (LPA) of the terminal supports a function of requesting and obtaining an activation code for profile re-download.

12. A profile server in a wireless communication system, the profile server comprising:
a transceiver; and
a controller configured to control to:
receive, from a terminal, a request message comprising a confirmation request on whether obtainment of an activation code for re-download of a first profile installed in the terminal is possible through the transceiver, and
transmit, to the terminal, as a response to the request message, a response message comprising information indicating whether obtainment of an activation code for re-download for a profile installed in the terminal is possible.

13. The profile server of claim 12, wherein the request comprises at least one of an indicator indicating that the request requests confirmation of whether obtainment of an activation code for the re-download of the first profile is possible and a profile identifier of the first profile, and further comprises an indicator indicating that the request is used for an activation code issuance processing request.

14. The profile server of claim 12, wherein the information included in the response message is included in profile metadata.

15. The profile server of claim 12, wherein the controller is configured to control to receive, from the terminal, during a mutual authentication process between the terminal and the profile server, a request message comprising an indicator indicating whether a local profile assistant (LPA) of the terminal supports a function of requesting and obtaining an activation code for profile re-download.
